# EUROPEAN PATENT APPLICATION

(11) **EP 4 704 206 A1**
(43) Date of publication of application: **04.03.2026**
(21) Application number: 23936307.0
(22) Date of filing: 14.08.2023
(51) Int. Cl.: H01M 10/0567, H01M 10/0525, H01M 10/058

(54) **ELECTROLYTE, LITHIUM METAL BATTERY AND PREPARATION METHOD THEREFOR, AND ELECTRICAL DEVICE**

(30) Priority: 05.05.2023 CN 202310493792
(71) Applicant: Contemporary Amperex Technology Co., Limited, Ningde, Fujian 352100 (CN)
(72) Inventor: GUAN, Wenhao, Ningde, Fujian 352100 (CN); MA, Li, Ningde, Fujian 352100 (CN); GE, Xiaoming, Ningde, Fujian 352100 (CN)
(74) Representative: Gong, Jinping
(86) International application number: PCT/CN2023/112953
(87) International publication number: WO 2024/230001

(57) **Abstract**

An electrolyte, a lithium metal battery and a preparation method thereof, and an electric apparatus are provided, related to the field of batteries. The electrolyte includes a lithium salt, an organic solvent, and an electrolyte additive, and a structure of the electrolyte additive includes R-M-X, where R includes a hydrocarbon group, M includes a metal with a standard electrode potential higher than a standard electrode potential of Li, X includes anions or a hydrocarbon group, and M is capable of forming an intermetallic compound or an alloy solid solution with Li. The lithium metal battery includes a negative electrode. The negative electrode includes a negative electrode current collector and a lithiophilic layer covering a surface of the negative electrode current collector. The lithiophilic layer includes M, and M includes the metal with a standard electrode potential higher than the standard electrode potential of Li and capable of forming an intermetallic compound or an alloy solid solution with Li. The electrolyte can improve lithiophilicity of the negative electrode surface, promoting uniform lithium nucleation, and improving cycling performance of the lithium metal battery.

## Description

### CROSS-REFERENCE TO RELATED APPLICATION

This application claims priority to Chinese Patent Application No. 202310493792.X, filed on May 5, 2023 and entitled "ELECTROLYTE, LITHIUM METAL BATTERY AND PREPARATION METHOD THEREOF, AND ELECTRIC APPARATUS", which is incorporated herein by reference in its entirety.

### TECHNICAL FIELD

This application relates to the field of batteries, specifically to an electrolyte, a lithium metal battery and a preparation method thereof, and an electric apparatus.

### BACKGROUND

Energy conservation and emission reduction are key to the sustainable development of the automotive industry, and electric vehicles have become an important component of the sustainable development of the automotive industry due to advantages of energy conservation and environmental protection. For electric vehicles, battery technology is an important factor in their development. Lithium secondary batteries are a type of battery using lithium metal or lithium alloy as a negative electrode material and a non-aqueous electrolyte, representing a widely applied category of batteries. Lithium secondary batteries are further divided into lithium-ion batteries and lithium metal batteries. Currently, lithium metal batteries face the issue of lithium dendrite formation at the negative electrode during cycling.

### SUMMARY

In view of the above issues, this application provides an electrolyte, a lithium metal battery and a preparation method thereof, and an electric apparatus, capable of improving lithiophilicity of a negative electrode surface, promoting uniform lithium nucleation, and improving cycling performance of the lithium metal battery.

According to a first aspect, this application provides an electrolyte including an electrolyte additive, where a structure of the electrolyte additive includes R-M-X, R includes a hydrocarbon group, M includes a metal with a standard electrode potential higher than a standard electrode potential of Li, X includes anions or a hydrocarbon group, M is capable of forming an intermetallic compound or an alloy solid solution with Li, and M is configured to form a lithiophilic layer on a surface of a negative electrode current collector of a battery.

In the technical solution of this embodiment of this application, R-M-X is used as the electrolyte additive, where a semi-covalent bond is formed between M and C in the hydrocarbon group R, and the semi-covalent bond has bond energy close to that of a covalent bond. When a potential reaches a reaction potential, the semi-covalent bond slowly breaks, and ions of M are slowly released. When the electrolyte is applied to a lithium metal battery, on one hand, the standard electrode potential of M is higher than that of Li, allowing M to gain electrons preferentially over Li and deposit before Li, forming a lithiophilic layer on a surface of an anode current collector, effectively increasing active sites for lithium deposition; on the other hand, since M in the lithiophilic layer can form an intermetallic compound or an alloy solid solution with Li, a binding force between M and lithium ions is stronger than a binding force between the current collector and lithium ions, that is, making the negative electrode surface lithiophilic. Specifically, an overpotential for lithium ions to gain electrons from M is lower than an overpotential to gain electrons from the current collector, thus lithiophilicity of the lithiophilic layer formed through M deposition is stronger than that of the current collector, reducing a lithium nucleation overpotential on the anode, decreasing localized lithium nucleation, suppressing dendrite formation, and thereby enabling uniform lithium nucleation, ultimately improving battery performance.

In some embodiments, a mass percentage of the electrolyte additive is not greater than 10%, optionally, the mass percentage of the electrolyte additive is 1% to 10%, optionally, 2% to 9%, and optionally, 3% to 6%. A small amount of the electrolyte additive is added, so that a lithiophilic layer can be formed on an anode surface after battery formation, reducing a lithium nucleation overpotential while minimizing an impact on the electrolyte due to the residual electrolyte additive.

In some embodiments, M includes at least one of Mg, Al, Mn, and Zn. A standard electrode potential (reaction potential) of each metal is higher than that of lithium, enabling deposition prior to lithium and forming the lithiophilic layer on the surface of the current collector. Moreover, these metals can form an intermetallic compound or an alloy solid solution with lithium, that is, the formed lithiophilic layer can make the negative electrode surface lithiophilic.

In some embodiments, R is a hydrocarbon group with 1 to 10 carbon atoms. Optionally, R includes CₙH₂ₙ₊₁, where n is 1 to 10. Bond energy between M and C in the hydrocarbon group with 1 to 10 carbon atoms is close to that of a covalent bond, allowing M to be released slowly, forming the lithiophilic layer with uniform deposition on the surface of the current collector, alleviating uneven lithium ion deposition caused by island-like metal agglomeration due to rapid release of M metal ions. Saturated single bonds surrounding C in an alkane group can alleviate increase in a battery impedance and capacity loss due to polymerization of organic groups on the surface of the negative electrode.

In some embodiments, X includes a halogen. Optionally, X is selected from at least one of Cl, Br, I, and F. A Grignard-like reagent R-M-X serves as the electrolyte additive, with an ionic bond connecting M and X. When a charge potential reaches a reaction potential, the Grignard-like reagent slowly releases the R hydrocarbon group, M metal ions, and X halogen ions. The X halogen ions facilitate formation of a stable interface film SEI, and the SEI contains lithium halide, enhancing ionic conductivity of the SEI and facilitating uniform deposition of lithium ions.

In some embodiments, X includes a hydrocarbon group. Optionally, X includes a hydrocarbon group with 1 to 10 carbon atoms. Optionally, X includes CₙH₂ₙ₊₁, where n is 1 to 10. A metal-organic compound R1-M-R2 (both R1 and R2 are hydrocarbon groups) serves as the electrolyte additive, enabling slow release of M metal ions.

In some embodiments, M is Mg, and X is Br. CₙH₂ₙ₊₁MgBr, as the electrolyte additive applied to a lithium metal battery, can simultaneously achieve favorable in-situ lithiophilicity and promote SEI formation.

According to a second aspect, this application provides a lithium metal battery including a negative electrode. The negative electrode includes a negative electrode current collector and a lithiophilic layer located on a surface of the negative electrode current collector. The lithiophilic layer includes M, and M includes a metal with a standard electrode potential higher than a standard electrode potential of Li and capable of forming an intermetallic compound or an alloy solid solution with Li.

In the technical solution of this embodiment of this application, the lithiophilic layer makes the surface of the negative electrode surface lithiophilic. During charge of the battery, lithium can form an intermetallic compound or an alloy solid solution with M metal in the lithiophilic layer, promoting uniform lithium nucleation and improving cycling performance of the lithium metal battery. During discharge of the battery, lithium in the lithiophilic layer can dissolve normally, achieving cyclic charge and discharge.

In some embodiments, an average thickness of the lithiophilic layer is 50 nm to 100 nm. Formation of an excessively thin lithiophilic layer is difficult. Specifically, in a case where the lithiophilic layer is formed on the surface of the negative electrode current collector using M metal through formation, if an amount of the M metal is excessively small and a corresponding lithiophilic layer formed is excessively thin, uneven agglomeration of M metal in the lithiophilic layer due to nanoscale effects may easily occur, exposing the current collector. An excessively lithiophilic layer causes the M metal to consume active lithium, reducing Coulombic efficiency of the battery.

In some embodiments, the negative electrode further includes an interface film located on a surface of the lithiophilic layer, and a thickness of the interface film does not exceed 1 µm. A micron-scale interface film SEI severely impairs dynamics of the battery.

In some embodiments, the interface film contains LiX, where X includes anions. Optionally, X includes a halogen. Lithium halide in the interface film SEI enables uniform lithium deposition and enhances ionic conductivity of the SEI. LiCl, LiBr, and the like can serve as lithiophilic substances to enable uniform lithium deposition. LiI, LiF, and the like can also improve ionic conductivity of the SEI and enhance mechanical strength of the SEI.

In some embodiments, the interface film contains R, where R includes a hydrocarbon group. Optionally, R includes a hydrocarbon group with 1 to 10 carbon atoms, optionally. Optionally, R includes CₙH₂ₙ₊₁, where n is 1 to 10.

In some embodiments, an electrolyte is further included. The electrolyte includes a lithium salt. The lithium salt includes at least one of lithium bis(fluorosulfonyl)imide, lithium bis(trifluoromethanesulfonyl)imide, lithium bis(oxalato)borate, and lithium difluoro(oxalato)borate.

According to a third aspect, this application provides an electric apparatus including the lithium metal battery provided in the second aspect, where the battery is configured to provide electrical energy.

According to a fourth aspect, this application provides a preparation method of the lithium metal battery provided in the second aspect, including the following steps:
assembling a positive electrode, a negative electrode current collector, and an electrolyte into a battery, where the electrolyte includes a lithium salt, an organic solvent, and an electrolyte additive, a structure of the electrolyte additive includes R-M-X, R includes a hydrocarbon group, M includes a metal with a standard electrode potential higher than a standard electrode potential of Li, X includes anions or a hydrocarbon group, and M is capable of forming an intermetallic compound or an alloy solid solution with Li; and
performing formation on the battery.

In the technical solution of this embodiment of this application, the above electrolyte additive is added to the electrolyte, so that M can be used to form a lithiophilic layer on a surface of the negative electrode current collector on the formed battery after formation. During charge, M in the lithiophilic layer can form an intermetallic compound or an alloy solid solution with Li to achieve lithium deposition. Discharge can be achieved through lithium dissolution.

In some embodiments, formation conditions are as follows: charging in a constant current mode at a fixed rate of 0.15C to 0.25C until a voltage reaches 3V to 4V, and then fully charging the battery in a constant voltage mode with a cutoff current of 0.04C to 0.06C. Using a low-rate current for battery formation allows the electrolyte additive to function during charge, to form a lithium metal battery for subsequent charge/discharge.

The above descriptions are merely an overview of the technical solutions of this application. For a clearer understanding of the technical means of this application to implement the solutions according to the content of the specification, and to make the above and other objectives, features, and advantages of this application clearer and more understandable, specific embodiments of this application are exemplified below.

### BRIEF DESCRIPTION OF DRAWINGS

Various other advantages and benefits become clear to persons of ordinary skill in the art through reading the detailed descriptions of preferred embodiments below. The drawings are only for the purpose of illustrating the preferred embodiments and are not considered limitations on this application. Moreover, throughout all drawings, identical components are denoted by identical reference sings. In the accompanying drawings:
FIG. 1 is a schematic structural diagram of a vehicle according to some embodiments of this application;
FIG. 2 is a schematic exploded view of a structure of a battery according to some embodiments of this application;
FIG. 3 is a schematic structural diagram of a battery cell according to some embodiments of this application; and
FIG. 4 is a schematic exploded view of a structure of a battery cell according to some embodiments of this application.

Reference signs: 1000. vehicle; 100. battery; 10. case; 11. accommodation space; 12. first part; 13. second part; 20. battery cell; 21. housing; 211. opening; 22. end cap assembly; 221. end cap; 222. electrode terminal; 23. electrode assembly; 24. current collecting member; 25. insulating protector; 200. controller; and 300. motor.

### DESCRIPTION OF EMBODIMENTS

Embodiments for the technical solutions of this application are described in detail below with reference to the accompanying drawings. The following embodiments are merely intended for a clearer description of the technical solutions of this application and therefore are used as just examples and do not constitute any limitations on the protection scope of this application.

Unless otherwise defined, all technical and scientific terms used herein have the same meaning as commonly understood by persons skilled in the technical field of this application; the terms used herein are only for the purpose of describing specific embodiments and are not intended to limit this application; terms "including" and "having" and any variations thereof in the specification, claims, and the above description of drawings of this application are intended to cover non-exclusive inclusion.

In the description of the embodiments of this application, technical terms "first", "second", and similar terms are only used to distinguish different objects and should not be understood as indication or implication of relative importance or implicit indication of a quantity, specific order, or primary-secondary relationship of the indicated technical features. In the description of the embodiments of this application, "multiple" means two or more, unless explicitly and specifically defined otherwise.

In this specification, reference to "embodiment" means that specific features, structures or characteristics described with reference to the embodiment may be incorporated in at least one embodiment of this application. Appearance of the phrase in various positions in the specification does not necessarily refer to the same embodiment or an independent or alternative embodiment mutually exclusive with other embodiments. Persons skilled in the art explicitly and implicitly understand that the embodiments described herein may be combined with other embodiments.

In the description of the embodiments of this application, the term "multiple" refers to two or more (including two), similarly.

In the description of the embodiments of this application, orientation or positional relationships indicated by technical terms "thickness", "upper", "lower", "front", "rear", "top", "bottom", "inner", "outer", and similar terms are based on orientation or positional relationships shown in the drawings, solely for convenience in describing the embodiments of this application and simplifying the description, and do not indicate or imply that a device or element referred to must have a specific orientation or be constructed and operated in a specific orientation, and thus should not be construed as limitations on the embodiments of this application.

In the descriptions of the embodiments of this application, unless explicitly specified and defined otherwise, technical terms "connect", "fix", and similar terms should be understood broadly; for example, a connection may be a fixed connection, a detachable connection, or an integral formation; a connection may be a mechanical connection or an electrical connection; a connection may be a direct connection or an indirect connection through an intermediate medium, or an internal communication or interaction between two elements. Persons of ordinary skill in the art can understand specific meanings of the above terms in the embodiments of this application based on specific circumstances.

Currently, from the perspective of market trends, applications of power batteries are becoming increasingly widespread. Power batteries are not only used in energy storage systems such as hydropower, thermal power, wind power, and solar power plants, but also widely applied in electric transportation devices such as electric bicycles, electric motorcycles, and electric vehicles, as well as in military equipment, aerospace, and other fields. With the continuous expansion of application fields of power batteries, market demand for power batteries is also continuously increasing.

Lithium-ion batteries have been widely used in technological products such as automobiles and mobile phones. Existing lithium-ion batteries primarily use graphite as a negative electrode material, with a theoretical specific capacity of 350 mAh/g to 400 mAh/g, and commercial lithium-ion battery capacities are approximately the theoretical value, making further significant capacity improvements challenging. Due to a high theoretical specific capacity of lithium metal, approximately 3860 mAh/g, and a low electrode potential (potential) (-3.04V vs standard hydrogen electrode), development of lithium metal batteries with lithium metal used as a negative electrode has attracted attention from researchers. To maximize battery energy density, ultrathin lithium metal (with a thickness typically less than 25 µm) is often necessary for lithium metal batteries, posing significant difficulties in practical processing and battery assembly. In this case, an anode-free lithium metal battery becomes an ideal choice.

An anode-free lithium metal secondary battery refers to a battery constructed without actively providing a negative electrode active material layer on a negative electrode side during battery manufacturing, for example, a battery system in which lithium metal is not provided through coating, deposition, or another process to form a negative electrode active material layer at the negative electrode, but instead, only a current collector such as copper foil is used as the negative electrode, while a positive electrode is formed with a common lithium-containing material (such as lithium iron phosphate, ternary positive electrode material, lithium cobalt oxide, or the like) during battery manufacturing. Compared with lithium-ion batteries, since the negative electrode directly uses copper foil rather than highly chemically active lithium metal, battery assembly and safety are greatly facilitated and ensured.

In some embodiments, to improve battery performance, the negative electrode side of the anode-free lithium metal battery may be provided with some conventional substances that can be used as negative electrode active materials, such as metal oxides, alloys, and the like. Although these materials have a certain capacity, due to their small quantity, these materials are not used as primary negative electrode active materials in batteries. A lithium metal secondary battery thus constituted can still be regarded as an anode-free lithium metal secondary battery.

A structure and basic principle of an anode-free lithium metal secondary battery are as follows: during initial charge, lithium ions from a positive electrode combine with electrons on a surface of a negative electrode current collector, undergoing lithium deposition to form a lithium metal phase (Li⁺+e→Li); and during discharge, lithium metal deposited on the negative electrode current collector dissolves (Li-e⁻→Li⁺), returning to the positive electrode. This process is repeated to achieve cyclic charge and discharge. Without a negative electrode active material, an energy density of the anode-free lithium metal secondary battery is significantly enhanced.

However, in construction of the anode-free lithium metal battery, a large nucleation overpotential of lithium metal on a commonly used negative electrode current collector leads to a pronounced tendency for localized nucleation. In severe cases, this causes dendrite formation, threatening safety and long-term cycling performance of the battery. For example, copper in a commonly used negative electrode current collector copper foil cannot form an intermetallic compound or an alloy solid solution with Li, resulting in a large nucleation overpotential of lithium on the copper foil and a pronounced tendency for localized nucleation.

Since a smaller nucleation overpotential of lithium metal on a negative electrode indicates stronger lithiophilicity of the negative electrode and easier bonding with lithium, a lithiophilic material layer with a lower overpotential can be first covered on a surface of a negative electrode current collector, enabling more uniform lithium metal deposition compared with direct deposition of the lithium metal on the surface of the negative electrode current collector.

Meanwhile, regarding promotion of SEI film formation, certain electrolyte additives are often added to an electrolyte to improve mechanical strength or ionic conductivity of the SEI.

To address a problem that lithium metal easily aggregates during deposition on the negative electrode, an electrolyte with a specific electrolyte additive is designed. When the electrolyte is applied to an anode-free lithium metal battery, through formation charge, the electrolyte additive first deposits on the negative electrode current collector to form the lithiophilic layer, improving lithiophilicity of a negative electrode surface. This enables lithium metal deposition and dissolution on a surface of the lithiophilic layer of the negative electrode of the anode-free lithium metal battery according to the basic principle of the anode-free lithium metal battery. Since the lithiophilic layer promotes uniform lithium nucleation, cycling life and Coulombic efficiency of the lithium metal battery can be improved.

The electrolyte can be used to prepare a battery cell, and the battery cell may be used in, but is not limited to being used in, an electric apparatus such as a vehicle, ship, or aircraft. A power source system of the electric apparatus formed by the battery cell, battery, and the like disclosed in this application may be used, to facilitate improvement of lithiophilicity of the negative electrode surface, promotion of uniform lithium nucleation, and improvement of the cycling life and Coulombic efficiency of the lithium metal negative electrode.

An embodiment of this application provides an electric apparatus using a battery as a power source, and the electric apparatus may be, but not limited to, a mobile phone, a tablet, a laptop, an electric toy, an electric tool, an electric bicycle, an electric vehicle, a ship, a spacecraft, or the like. The electric toy may be a fixed or mobile electric toy, for example, a game console, an electric toy car, an electric toy ship, or an electric toy airplane. The spacecraft may include an airplane, a rocket, a space shuttle, a spaceship, or the like.

For convenience of explanation, in the following embodiments, a vehicle 1000 is used as an example of an electric apparatus according to an embodiment of this application.

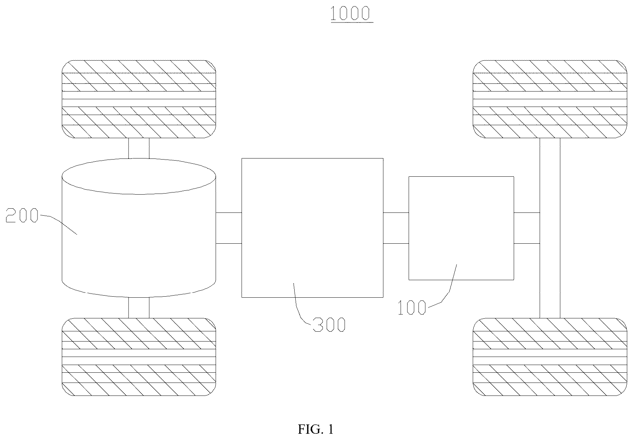

Refer to FIG. 1. FIG. 1 is a schematic structural diagram of a vehicle 1000 according to some embodiments of this application. The vehicle 1000 is provided with a battery 100 inside, and the battery 100 may be disposed at a bottom, front, or rear of the vehicle 1000. The battery 100 may be used for power supply of the vehicle 1000. For example, the battery 100 can serve as an operating power source of the vehicle 1000.

The vehicle 1000 can further include a controller 200 and a motor 300. The controller 200 is configured to control the battery 100 to supply power to the motor 300, for example, to satisfy operational power demands during starting, navigation, and driving of the vehicle 1000.

In some embodiments of this application, the battery 100 may serve as an operating power source of the vehicle 1000, and may further serve as a driving power source of the vehicle 1000, completely or partially replacing fuel or natural gas to provide driving power for the vehicle 1000.

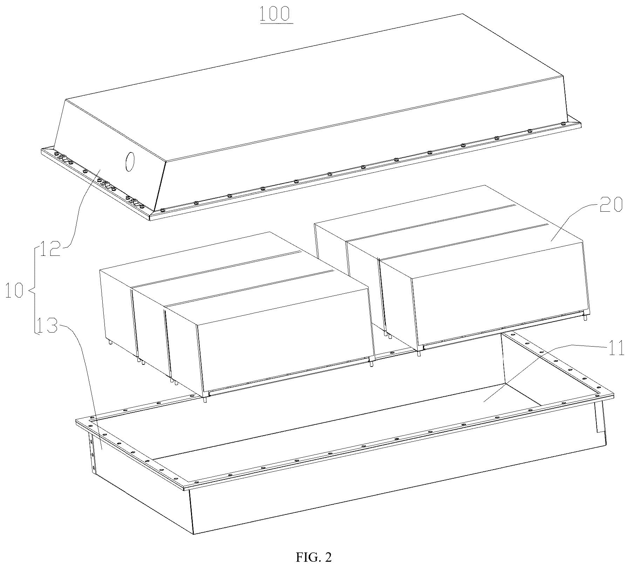

FIG. 2 is a schematic exploded view of a structure of a battery 100 according to some embodiments of this application. Refer to FIG. 2. The battery 100 includes a case 10 and a battery cell 20. The battery cell 20 is accommodated within the case 10.

The case 10 is configured to provide an accommodation space 11 for the battery cell 20. In some embodiments, the case 10 may include a first part 12 and a second part 13, and the first part 12 and the second part 13 are mutually covered to define the accommodation space 11 for accommodating the battery cell 20. Certainly, a joint of the first part 12 and the second part 13 may be sealed by a sealing member (not shown in the figure), and the sealing member may be a sealing ring, a sealing adhesive, or the like.

The first part 12 and the second part 13 can be of various shapes, such as a cuboid, a cylinder, or the like. The first part 12 may be a hollow structure with an opening on one side to form an accommodation cavity for accommodating the battery cell 20, the second part 13 may also be a hollow structure with an opening on one side to form an accommodation cavity for accommodating the battery cell 20, and an opening side of the second part 13 covers an opening side of the first part 12 to form the case 10 with the accommodation space 11. Alternatively, as shown in FIG. 2, the first part 12 may be a hollow structure with an opening on one side, the second part 13 can be a plate structure, and the second part 13 covers the opening side of the first part 12 to form the case 10 with the accommodation space 11.

In the battery 100, the battery cell 20 may include one cell or multiple cells. If multiple battery cells 20 are present, the multiple battery cells 20 may be connected in series, parallel, or series-parallel, where the series-parallel refers to both series and parallel connections among the multiple battery cells 20. The multiple battery cells 20 may be directly connected in series, parallel, or series-parallel, and then an entirety formed by the multiple battery cells 20 is accommodated in the case 10; or certainly, the multiple battery cells 20 may be first connected in series, parallel, or series-parallel to form a battery module, and then multiple battery modules are connected in series, parallel, or series-parallel to form an entirety accommodated in the case 10. The battery cell 20 may be cylindrical, flat, cuboidal, or of another shape. FIG. 2 exemplarily shows a case where the battery cell 20 is cuboidal.

In some embodiments, the battery 100 may further include a busbar component (not shown in the figure), and an electrical connection between the multiple battery cells 20 may be achieved through the busbar component to achieve series, parallel, or series-parallel connection of the multiple battery cells 20.

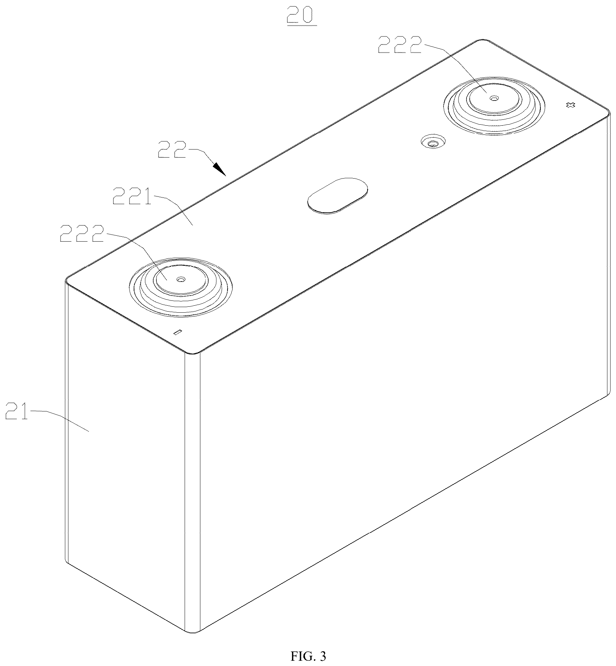

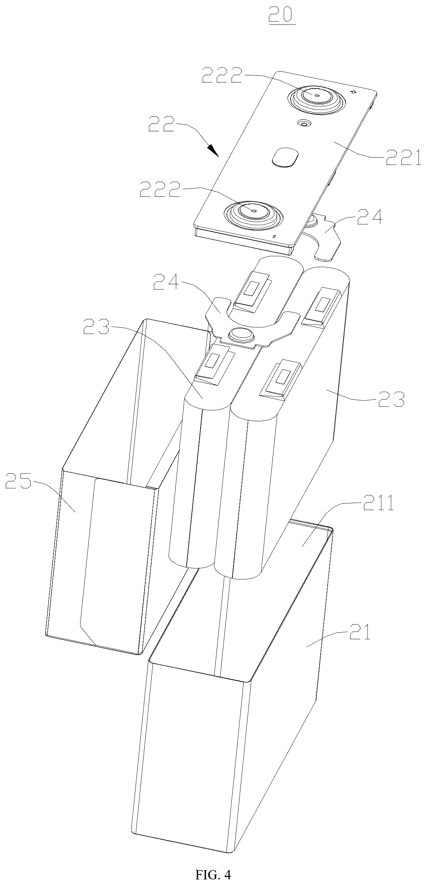

FIG. 3 is a schematic structural diagram of a battery cell 20 according to some embodiments of this application. FIG. 4 is a schematic exploded view of a structure of a battery cell 20 according to some embodiments of this application. Refer to FIG. 3 and FIG. 4. The battery cell 20 may include a housing 21, an end cap assembly 22, and an electrode assembly 23. The housing 21 has an opening 211, the electrode assembly 23 is accommodated in the housing 21, and the end cap assembly 22 is configured to cover the opening 211.

A shape of the housing 21 may be determined based on a specific shape of the electrode assembly 23. For example, if the electrode assembly 23 is a cuboidal structure, the housing 21 may also be a cuboidal structure. FIG. 3 and FIG. 4 exemplarily show a case where the housing 21 and the electrode assembly 23 are cuboidal.

A material of the housing 21 may also be of various types, such as copper, iron, aluminum, stainless steel, aluminum alloy, or the like. This is not particularly limited in these embodiments of this application.

The end cap assembly 22 includes an end cap 221 and an electrode terminal 222. The end cap assembly 22 is configured to seal the opening 211 of the housing 21 to form a sealed mounting space (not shown in the figure). The mounting space is configured to accommodate the electrode assembly 23. The mounting space is also configured to accommodate an electrolytic substance, such as an electrolyte. The end cap assembly 22 serves as a component for outputting electrical energy of the electrode assembly 23, and the electrode terminal 222 in the end cap assembly 22 is configured to electrically connect with the electrode assembly 23. Specifically, the electrode terminal 222 is electrically connected with a tab of the electrode assembly 23. For example, the electrode terminal 222 is connected with the tab through a current collecting member 24, to achieve an electrical connection between the electrode terminal 222 and the tab.

It should be noted that the housing 21 may have one or two openings 211. If the housing 21 has one opening 211, one end cap assembly 22 is provided, two electrode terminals 222 may be provided in the end cap assembly 22, and the two electrode terminals 222 are respectively configured to electrically connect with a positive electrode tab and a negative electrode tab of the electrode assembly 23. If the housing 21 has two openings 211, for example, the two openings 211 are provided on opposite sides of the housing 21, two end cap assemblies 22 are provided. The two end cap assemblies 22 respectively cover the two openings 211 of the housing 21. In this case, an electrode terminal 222 in one end cap assembly 22 may be a positive electrode terminal configured to electrically connect with a positive electrode tab of the electrode assembly 23; and an electrode terminal 222 in another end cap assembly 22 may be a negative electrode terminal configured to electrically connect with a negative electrode piece of the electrode assembly 23.

In some embodiments, as shown in FIG. 4, the battery cell 20 may further include an insulating protector 25 fixed to a circumference of the electrode assembly 23, and the insulating protector 25 is configured to insulate and isolate the electrode assembly 23 from the housing 21. For example, the insulating protector 25 is an adhesive tape bonded to the circumference of the electrode assembly 23. In some embodiments, the electrode assembly 23 is provided in plurality, and the insulating protector 25 surrounds circumferences of the multiple electrode assemblies 23, integrating the multiple electrode assemblies 23 into an integral structure to maintain structural stability of the electrode assemblies 23.

According to some embodiments of this application, the electrolyte includes a lithium salt, an organic solvent, and an electrolyte additive. A structure of the electrolyte additive includes R-M-X, where R includes a hydrocarbon group, M includes a metal with a standard electrode potential higher than that of Li, X includes anions or a hydrocarbon group, M is capable of forming an intermetallic compound or an alloy solid solution with Li, and M is used for forming a lithiophilic layer on a surface of a negative electrode current collector of the battery.

The lithium salt may be at least one of an organic lithium salt or an inorganic lithium salt, specifically, may be at least one of lithium bis(fluorosulfonyl)imide (LiFSI), lithium bis(trifluoromethanesulfonyl)imide (LiTFSI), lithium bis(oxalato)borate (LiBOB), and lithium difluoro(oxalato)borate (LiDFOB), or another optional lithium salt, or any combination thereof.

The organic solvent may include at least one of ethylene carbonate, propylene carbonate, dimethyl carbonate, diethyl carbonate, dipropyl carbonate, ethyl methyl carbonate, methyl formate, ethyl formate, ethyl propionate, propyl propionate, methyl butyrate, ethyl acetate, anhydride, N-methylpyrrolidone, N-methylformamide, N-methylacetamide, acetonitrile, sulfolane, dimethyl sulfoxide, ethylene sulfite, propylene sulfite, methyl sulfide, diethyl sulfite, dimethyl sulfite, tetrahydrofuran, fluorine-containing cyclic organic ester, and sulfur-containing cyclic organic ester.

"R-M-X" refers to a structural form of the electrolyte additive, containing R, M, and X, with M bonded to both R and X. The hydrocarbon group R refers to a group containing carbon and hydrogen atoms, connected with M via carbon. After bond cleavage, R correspondingly forms an R hydrocarbon group, M correspondingly forms M metal ions, and X correspondingly forms anions or a hydrocarbon group. In some embodiments of this application, an electrolyte additive of the above structural form (R1-M1-X1) may be added to the electrolyte, or two electrolyte additives of the above structural form may be added (R1-M1-X1 and R2-M2-X2, where R1 and R2 may be the same or different, M1 and M2 may be the same or different, and X1 and X2 may be the same or different), or even more electrolyte additives of the above structural form may be added.

Through slow cleavage of a semi-covalent bond between carbon of the hydrocarbon group R and the M metal, M metal ions are slowly released; moreover, a standard electrode potential of M being higher than that of Li allows M to deposit in-situ on a surface of an anode current collector to form a lithiophilic layer, effectively increasing active sites for lithium deposition. Lithium may form an intermetallic compound or an alloy solid solution with the M metal in the lithiophilic layer, reducing localized lithium nucleation, suppressing dendrite formation, and thereby enabling uniform lithium nucleation.

According to some embodiments of this application, a mass percentage of the electrolyte additive is not greater than 10%, optionally, 1% to 10%, optionally, 2% to 9%, and optionally, 3% to 6%.

The mass percentage of the electrolyte additive refers to a mass concentration of the electrolyte additive in the electrolyte. For example, the mass percentage of the electrolyte additive is 0.1%, 0.5%, 0.8%, 1%, 2%, 3%, 4%, 5%, 6%, 7%, 8%, 9%, or 10%, or any value within a range between the above two values.

In some embodiments of this application, the electrolyte additive is consumed after battery formation, forming a lithiophilic layer of a certain thickness on the anode surface, with only a minimal amount of the electrolyte additive remaining in the electrolyte; or the electrolyte additive possibly is completely consumed and no longer present.

The standard electrode potential of the M metal is higher than that of Li, and M is capable of forming an intermetallic compound or an alloy solid solution with Li. The standard electrode potential refers to an equilibrium potential measured at a temperature of 25°C when an effective concentration of metal ions is 1 mol/L (that is, an activity of 1). "Intermetallic compound" refers to a new phase with a fixed composition and a specific crystal structure formed by Li metal and M metal, where the structure is different from structures of both the raw metals. "Alloy solid solution" refers to a state where the M metal can mix with Li metal and remain mutually soluble (solute metal can dissolve into a crystal lattice of a solvent metal).

According to some embodiments of this application, M includes at least one of Mg, Al, Mn, and Zn. For example, M may be Mg, Al, Mn, or Zn, or a combination of two metals, such as Mg and Al, Mg and Mn, Mg and Zn, Al and Mn, Al and Zn, Mn or Zn, or M simultaneously includes Mg and Mn (corresponding electrolyte additives are R-Mg-X and R-Mn-X, or R-Mg-Mn-X). Standard electrode potentials of the two metals are higher than that of lithium, enabling both to deposit preferentially to collectively form a lithiophilic layer, and both are capable of forming an intermetallic compound or an alloy solid solution with lithium metal. M may alternatively be a combination of three or four of these metals. Combinations thereof are not listed exhaustively herein.

The hydrocarbon group may be at least one of an alkane group (monovalent saturated group), an alkene group (monovalent unsaturated group), an alkylene group (divalent group), and a tertiary group ( trivalent group) with 1 to 10 carbon atoms, where each hydrocarbon group may further be a chain hydroc arbon group or a cyclic hydrocarbon group. According to some embodiments of this application, R include s CₙH₂ₙ₊₁, where n is 1 to 10. For example, R may be -CH₃, -C₂H₅, -C₃H₇, -C₄H₉, -C₅H₁₁, -C₆H₁₃, -C₇H₁₅, -C₈H₁₇, -C₉H₁₉, or -C₁₀H₂₁; or R may alternatively be two or more alkane groups. In this case, a structur e of a corresponding electrolyte additive may be simultaneous connection between multiple alkane groups with M, or respective connection between multiple alkane groups and electrolyte additives of different struc tures.

According to some embodiments of this application, X includes a halogen. Optionally, X is selected from at least one of Cl, Br, I, and F. For example, X may be Cl, Br, I, or F, or may be two or three halogens. In this case, a structure of a corresponding electrolyte additive may be simultaneous connection between two halogens and M, or may be respective connection between multiple halogens and electrolyte additives of different structures, where each halogen facilitates formation of a stable SEI.

According to some embodiments of this application, X includes a hydrocarbon group. Optionally, X includes a hydrocarbon group with 1 to 10 carbon atoms. Optionally, X includes CₙH₂ₙ₊₁, where n is 1 to 10. X may be at least one of an alkane group (monovalent saturated group), an alkene group (monovalent unsaturated group), an alkylene group (divalent group), or a tertiary group (trivalent group). For example, X may be -CH₃, -C₂H₅, -C₃H₇, - C₄H₉, -C₅H₁₁, -C₆H₁₃, -C₇H₁₅, -C₈H₁₇, -C₉H₁₉, or -C₁₀H₂₁, or two alkane groups.

According to some embodiments of this application, the electrolyte additive is a Grignard reagent R-Mg-X, for example, R is a hydrocarbon group and X is a halogen. For example, the electrolyte additive is R-Mg-Br, R-Mg-Cl, R-Mg-I, or R-Mg-F. In some other embodiments, the electrolyte additive may alternatively be a Grignard-like reagent R-M-X, where R is a hydrocarbon group, M is a metal other than Mg, and X is a halogen. For example, the electrolyte additive is R-Al-Br₂, R-Mn-Br, or R-Zn-Br.

The foregoing describes an electrolyte capable of improving lithiophilicity of a negative electrode surface and promoting uniform lithium nucleation, primarily used to construct a lithium metal battery. Below is a description of a lithium metal battery, where the lithium metal battery may be an anode-free lithium metal secondary battery.

According to some embodiments of this application, the lithium metal battery includes a positive electrode and a negative electrode, a separator, and an electrolyte, where the positive electrode is capable of providing lithium ions, the negative electrode includes a negative electrode current collector and a lithiophilic layer located on a surface of the negative electrode current collector, the lithiophilic layer includes M, M includes a metal with a standard electrode potential higher than that of Li and capable of forming an intermetallic compound or an alloy solid solution with Li.

During charge of the lithium metal battery, lithium ions from the positive electrode combine with electrons on the surface of the lithiophilic layer of the negative electrode, and then lithium deposition occurs. During discharge of the lithium metal battery, lithium metal deposited on the negative electrode dissolves, returning to the positive electrode. This process is repeated to achieve cyclic charge and discharge of the lithium metal battery.

During lithium deposition, lithium forms an intermetallic compound or an alloy solid solution with the M metal in the lithiophilic layer, forming a lithiophilic layer of the intermetallic compound or the alloy solid solution containing lithium metal.

According to some embodiments of this application, M may be a type of metal with a standard electrode potential higher than that of Li and capable of forming an intermetallic compound or an alloy solid solution with Li, such as Mg, Al, Mn, Zn, and the like.

### [Negative electrode]

According to some embodiments of this application, an average thickness of the lithiophilic layer is 50 nm to 100 nm.

The average thickness of the lithiophilic layer refers to an average thickness before lithium deposition. For example, the average thickness of the lithiophilic layer may be 50 nm, 60 nm, 70 nm, 80 nm, 90 nm, or 100 nm, or any value within a range between the above two values.

After battery formation, an interface film forms on the negative electrode. According to some embodiments of this application, the negative electrode further includes an interface film SEI located on the surface of the lithiophilic layer, and a thickness of the interface film does not exceed 1 µm.

According to some embodiments of this application, the interface film contains LiX, where X includes anions. Optionally, X includes a halogen. For example, the interface film contains at least one of LiCl, LiBr, LiI, and LiF.

According to some embodiments of this application, the interface film contains R, where R includes a hydrocarbon group. Optionally, R includes a hydrocarbon group with 1 to 10 carbon atoms. Optionally, R includes CₙH₂ₙ₊₁, where n is 1 to 10. For descriptions of R, reference can be made to the foregoing introduction regarding R in the electrolyte additive. Details are not repeated herein.

According to some embodiments of this application, the negative electrode current collector may be a metal foil or a composite current collector. For example, as a metal foil, a copper foil may be used. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, silver alloy, and the like) on the polymer material substrate (such as a material substrate of polypropylene (PP), polyethylene terephthalate (PET), polybutylene terephthalate (PBT), polystyrene (PS), polyethylene (PE), and the like).

### [Positive electrode]

According to some embodiments of this application, the positive electrode includes a positive electrode current collector and a positive electrode active material layer located on a surface of the positive electrode current collector, and the positive electrode active material layer provides lithium ions.

The positive electrode current collector may be a metal foil or a composite current collector. For example, as a metal foil, an aluminum foil may be used. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, and the like) on a polymer material substrate (such as a material substrate of polypropylene (PP), polyethylene terephthalate (PET), polybutylene terephthalate (PBT), polystyrene (PS), polyethylene (PE), and the like).

According to some embodiments of this application, the positive electrode active material layer contains a positive electrode active material, a conductive agent, a binder, and any other components. The positive electrode active material provides lithium ions and may be selected from any known positive electrode active materials for lithium batteries. For example, the positive electrode active material may include lithium cobalt oxide, lithium nickel cobalt manganese oxide, lithium nickel cobalt aluminum oxide, lithium manganate, lithium manganese iron phosphate, lithium vanadium phosphate, lithium vanadyl phosphate, lithium iron phosphate, and a lithium-rich manganese-based material.

### [Separator]

A type of the separator is not particularly limited in this application, and any known porous-structure separator with good chemical and mechanical stability can be used.

In some embodiments of this application, a material of the separator may be selected from at least one of glass fiber, non-woven fabric, polyethylene, polypropylene, and polyvinylidene fluoride. The separator may be a single-layer film or a multilayer composite film. This is not particularly limited. When the separator is a multilayer composite film, materials of each layer may be the same or different. This is not particularly limited.

### [Electrolyte]

According to some embodiments of this application, the electrolyte includes a lithium salt and an organic solvent.

The lithium salt may be at least one of an organic lithium salt or an inorganic lithium salt, specifically, may be at least one of lithium bis(fluorosulfonyl)imide (LiFSI), lithium bis(trifluoromethanesulfonyl)imide (LiTFSI), lithium bis(oxalato)borate (LiBOB), and lithium difluoro(oxalato)borate (LiDFOB), or another optional lithium salt, or any combination thereof.

The organic solvent may include at least one of ethylene carbonate, propylene carbonate, dimethyl carbonate, diethyl carbonate, dipropyl carbonate, ethyl methyl carbonate, methyl formate, ethyl formate, ethyl propionate, propyl propionate, methyl butyrate, ethyl acetate, anhydride, N-methylpyrrolidone, N-methylformamide, N-methylacetamide, acetonitrile, sulfolane, dimethyl sulfoxide, ethylene sulfite, propylene sulfite, methyl sulfide, diethyl sulfite, dimethyl sulfite, tetrahydrofuran, fluorine-containing cyclic organic ester, and sulfur-containing cyclic organic ester.

In some embodiments, the positive electrode, the negative electrode, and the separator can be formed into an electrode assembly through winding or lamination.

In some embodiments, the lithium metal battery may include an outer package. The outer package may be configured to encapsulate the above electrode assembly and electrolytic substance.

The foregoing describes a lithium metal battery, and different preparation methods of the lithium metal battery are described below.

According to some embodiments of this application, this application provides a preparation method of a lithium metal battery. According to the method, a positive electrode, a negative electrode with a lithiophilic layer, and a separator of the above structure are assembled into an electrode assembly. The electrode assembly and an electrolytic substance are encapsulated to form a lithium metal battery.

The negative electrode may be prepared by first forming a lithiophilic layer containing M metal on a surface of a negative electrode current collector through deposition. Then the negative electrode is assembled to form a lithium metal battery.

According to some other embodiments of this application, this application further provides a preparation method of a lithium metal battery, including the following steps.

The positive electrode, the negative electrode current collector, and the electrolyte are assembled into a battery. The electrolyte includes a lithium salt, an organic solvent, and an electrolyte additive. A structure of the electrolyte additive includes R-M-X, where R includes a hydrocarbon group, M includes a metal with a standard electrode potential higher than that of Li, X includes anions, and M is capable of forming an intermetallic compound or an alloy solid solution with Li.

### Formation charge is performed on the battery.

The electrolyte is the electrolyte with the electrolyte additive introduced above; the positive electrode may be the positive electrode from the lithium metal battery structure introduced above; the battery on which formation charge is performed is a lithium metal battery; and the lithium metal battery has the structural features of the lithium metal battery introduced above. Details are not repeated herein.

In the preparation method, the negative electrode current collector and the electrolyte with the electrolyte additive are first assembled into a battery, and formation charge is performed on the battery; the electrolyte additive (R-M-X) functions during charge, with M depositing on the surface of the negative electrode current collector to form the lithiophilic layer, and R and X remaining on the negative electrode surface to promote SEI formation, thereby forming the lithium metal battery with the structure described above; and after formation, the electrolyte additive in the electrolyte is substantially consumed. The negative electrode structure is: negative electrode current collector+lithiophilic layer (containing M metal)+SEI (containing R and X). After charge, the lithiophilic layer further contains lithium metal, with M metal and lithium metal existing in the form of the intermetallic compound or the alloy solid solution.

It should be noted that, for the lithium metal battery in this application, as long as the battery structure is formed through assembly, whether formation is performed or not, the battery falls within the scope of protection claimed by this application.

According to some embodiments of this application, conditions for formation charge are as follows: charging in a constant current mode at a fixed rate of 0.15C to 0.25C until a voltage rises to 3V to 4V, and then fully charging the battery in a constant voltage mode with a cutoff current of 0.04C to 0.06C.

The formation charge rate of this application is low, enabling the electrolyte additive to fully function and form the lithiophilic layer on the surface of the negative electrode current collector.

According to some embodiments of this application, this application further provides an electric apparatus, including the lithium metal battery of any of the above solutions, and the lithium metal battery is configured to provide electrical energy to the electric apparatus.

The electric apparatus may be any one of the foregoing devices or systems using a battery.

In the following, one or more embodiments are further described in detail with reference to the examples below. Certainly, these examples do not limit a scope of the one or more embodiments.

### Example 1

### (1) Preparation of electrolyte

In a glove box, lithium bis(fluorosulfonyl)imide salt (LiFSI, 99.9%, East Star Biotech (Suzhou) Co., Ltd.) was dissolved in Dimethoxyethane (DME, 99%, Shanghai Acmec Biochemical Co., Ltd.) to prepare a 1M solution.

Commercially available ethylmagnesium bromide (C₂H₅MgBr, Macklin Reagent) was dissolved as an electrolyte additive in the 1M solution to prepare a solution with a mass percentage of the electrolyte additive of 5%, and stirred at 700 rpm on a magnetic stirrer in the glove box for 3 h to obtain an electrolyte.

### (2) Preparation of positive electrode plate

Lithium iron phosphate (LFP), conductive carbon black, and binder polyvinylidene fluoride (PVDF) were added to N-methylpyrrolidone (NMP) at a weight ratio of 8:1:1, and stirred in a dry room to form a slurry. The slurry was applied on an aluminum foil, dried, and cold-pressed, with a coating weight of 0.2 g/cm² and a compacted density of 2.0 g/cm³, to prepare a positive electrode plate.

### (3) Preparation of full battery

A polyethylene (PE) porous polymer film was used as a separator, and a copper foil of 8 µm was used as a negative electrode current collector. The positive electrode plate prepared above, the separator, and the negative electrode current collector were stacked in sequence, with the separator positioned between the positive electrode and negative electrode for isolation, and were wound to obtain a bare cell. The bare cell was placed in an outer package, and the electrolyte prepared above was injected, and sealing was performed to obtain a full battery.

### Example 2

This example was the same as Example 1 except that in step (1), ethyl zinc bromide (C₂H₅ZnBr, Alfa Aesar) was used as the electrolyte additive.

### Example 3

This example was the same as Example 1 except that in step (1), ethylmagnesium bromide (C₂H₅MnBr, Alfa Aesar) was used as the electrolyte additive.

### Example 4

This example was the same as Example 1 except that in step (1), ethylaluminum dibromide (C₂H₅AlBr₂, Macklin) was used as the electrolyte additive.

### Example 5

This example was the same as Example 1 except that in step (1), ethylmagnesium chloride (C₂ H₅MgCl, Macklin) was used as the electrolyte additive.

### Example 6

This example was the same as Example 1 except that in step (1), ethylmagnesium iodide (C₂H₅MgI, Macklin) was used as the electrolyte additive.

### Example 7

This example was the same as Example 1 except that in step (1), ethylmagnesium fluoride (C₂H₅MgF, Macklin) was used as the electrolyte additive.

### Example 8

This example was the same as Example 1 except that in step (1), the mass percentage of the electrolyte additive (C₂H₅MgBr) in the prepared electrolyte was 9%.

### Example 9

This example was the same as Example 1 except that in step (1), the mass percentage of the electrolyte additive (C₂H₅MgBr) in the prepared electrolyte was 6%.

### Example 10

This example was the same as Example 1 except that in step (1), the mass percentage of the electrolyte additive (C₂H₅MgBr) in the prepared electrolyte was 3%.

### Example 11

This example was the same as Example 1 except that in step (1), the mass percentage of the electrolyte additive (C₂H₅MgBr) in the prepared electrolyte was 1%.

### Example 12

This example was the same as Example 1 except that in step (1), the mass percentage of the electrolyte additive (C₂H₅MgBr) in the prepared electrolyte was 10%.

### Example 13

This example was the same as Example 1 except that in step (1), the mass percentage of the electrolyte additive (C₂H₅MgBr) in the prepared electrolyte was 0.5%.

### Example 14

This example was the same as Example 1 except that in step (1), buthylmagnesium bromide (C₄H₉MgBr, Macklin) was used as the electrolyte additive, and the mass percentage of the electrolyte additive (C₄H₉MgBr) in the prepared electrolyte was 3%.

### Example 15

This example was the same as Example 1 except that in step (1), hexylmagnesium bromide (C₆H₁₃MgBr, Macklin) was used as the electrolyte additive, and the mass percentage of the electrolyte additive (C₆H₁₃MgBr) in the prepared electrolyte was 3%.

### Example 16

This example was the same as Example 1 except that in step (1), n-dodecylmagnesium bromide (C₁₂H₂₅MgBr, Macklin) was used as the electrolyte additive, and the mass percentage of the electrolyte additive (C₁₂H₂₅MgBr) in the prepared electrolyte was 3%.

### Example 17

This example was the same as Example 1 except that in step (1), vinylmagnesium bromide (C₂H₃MgBr, Macklin) was used as the electrolyte additive, and the mass percentage of the electrolyte additive (C₂H₃MgBr) in the prepared electrolyte was 3%.

### Example 18

This example was the same as Example 1 except that in step (1), diethyl magnesium ((C₂H₅)₂Mg, Macklin) was used as the electrolyte additive, and the mass percentage of the electrolyte additive ((C₂H₅)₂Mg) in the prepared electrolyte was 3%.

### Example 19

This example was the same as Example 1 except that in step (1), n-propylmanganese chloride (C₃H₇MnCl, Macklin) was used as the electrolyte additive, and the mass percentage of the electrolyte additive (C₃H₇MnCl) in the prepared electrolyte was 6%.

### Example 20

This example was the same as Example 1 except that in step (1), n-pentylzinc iodide (C₅H₁₁ZnI, Macklin) was used as the electrolyte additive, and the mass percentage of the electrolyte additive (C₅H₁₁ZnI) in the prepared electrolyte was 9%.

### Example 21

This example was the same as Example 1 except that in step (1), ethylmagnesium chloride (C₂H₅MgCl, Macklin) was used as the electrolyte additive, and the mass percentage of the electrolyte additive (C₂H₅MgCl) in the prepared electrolyte was 3%.

### Comparative example 1

This comparative example was the same as Example 1 except that no electrolyte additive was added.

### Comparative example 2

This comparative example was the same as Example 1 except that in step (1), hexamethyldisilazide magnesium chloride (HMDSMgCl, Macklin) was used as the electrolyte additive, and the mass percentage of the electrolyte additive (HMDSMgCl) in the prepared electrolyte was 3%.

### Comparative Example 3

This comparative example was the same as Example 1 except that in step (1), ethyl nickel bromide (C₂H₅NiBr, Macklin) was used as the electrolyte additive, and the mass percentage of the electrolyte additive (C₂H₅NiBr) in the prepared electrolyte was 3%.

Performance of batteries prepared in the above examples and comparative examples is tested.

### (1) Full battery cycling performance test

Charge conditions: At room temperature (25°C), the battery was charged in a constant current-constant voltage mode (CC-CV mode): the battery was first charged in a constant current mode at a fixed rate of 0.2C to a voltage of 3.65V, and then the battery was fully charged in a constant voltage mode with a cutoff current of 0.05C.

Discharge conditions: The battery was discharged in a constant current mode at a discharge rate of 0.5C to 2V, and cycled for 200 cycles.

One charge and one following discharge formed one charge-discharge cycle, and a first discharge capacity was recorded as a discharge capacity of the 1^{st} cycle. The charge-discharge cycle process was repeated, and the number of cycles at which a discharge capacity retention rate reached 50% was recorded.

### (2) Half-cell overpotential test

A copper foil of 8 µm was used as a positive electrode; a lithium foil of 400 µm was used as a negative electrode; a polyethylene (PE) porous polymer film was used as a separator; and the electrolyte from the above example or comparative example was used to prepare a half-cell. The test method was as follows: the battery was discharged at a current density of 1 mA/cm², and a lowest potential during discharge was recorded as an overpotential (representing a potential of the battery relative to Li/Li⁺ electrode, indicating that after using the electrolyte prepared in the example of this application, a lithium deposition potential on the copper foil decreases).

Tested performance of the batteries is shown in Table 1 below.

**Table 1 Battery performance**

| | Electrolyte additive R-M-X | R | M | X | Mass percentage (%) | Overpotential (vs Li/Li⁺) (V) | Full battery cycles at 50% capacity retention |
|---|---|---|---|---|---|---|---|
| Example 1 | C₂H₅MgBr | C₂H₅ | Mg | Br | 5 | -0.05 | 136 |
| Example 2 | C₂H₅ZnBr | C₂H₅ | Zn | Br | 5 | -0.07 | 114 |
| Example 3 | C₂H₅MnBr | C₂H₅ | Mn | Br | 5 | -0.08 | 100 |
| Example 4 | C₂H₅AlBr₂ | C₂H₅ | Al | Br | 5 | -0.08 | 84 |
| Example 5 | C₂H₅MgCl | C₂H₅ | Mg | Cl | 5 | -0.06 | 88 |
| Example 6 | C₂H₅MgI | C₂H₅ | Mg | I | 5 | -0.07 | 80 |
| Example 7 | C₂H₅MgF | C₂H₅ | Mg | F | 5 | -0.08 | 81 |
| Example 8 | C₂H₅MgBr | C₂H₅ | Mg | Br | 9 | -0.06 | 100 |
| Example 9 | C₂H₅MgBr | C₂H₅ | Mg | Br | 6 | -0.04 | 131 |
| Example 10 | C₂H₅MgBr | C₂H₅ | Mg | Br | 3 | -0.04 | 152 |
| Example 11 | C₂H₅MgBr | C₂H₅ | Mg | Br | 1 | -0.05 | 83 |
| Example 12 | C₂H₅MgBr | C₂H₅ | Mg | Br | 10 | -0.06 | 95 |
| Example 13 | C₂H₅MgBr | C₂H₅ | Mg | Br | 0.5 | -0.10 | 75 |
| Example 14 | C₄H₉MgBr | C₄H₉ | Mg | Br | 3 | -0.04 | 140 |
| Example 15 | C₆H₁₃MgBr | C₆H₁₃ | Mg | Br | 3 | -0.05 | 128 |
| Example 16 | C₁₂H₂₅MgBr | C₁₂H₂₅ | Mg | Br | 3 | -0.06 | 107 |
| Example 17 | C₂H₃MgBr | C₂H₃ | Mg | Br | 3 | -0.04 | 130 |
| Example 18 | (C₂H₅)₂Mg | C₂H₅ | Mg | C₂H₅ | 3 | -0.08 | 78 |
| Example 19 | C₃H₇MnCl | C₃H₇ | Mn | Cl | 6 | -0.07 | 95 |
| Example 20 | C₃H₁₁ZnI | C₅H₁₁ | Zn | I | 9 | -0.06 | 98 |
| Example 21 | C₂H₅MgCl | C₂H₅ | Mg | Cl | 3 | -0.07 | 80 |
| Comparative example 1 | / | / | / | / | 0 | -0.12 | 66 |
| Comparative example 2 | HMDSMgCl | HMDS | Mg | Cl | 3 | -0.11 | 60 |
| Comparative example 3 | C₂H₅NiBr | C₂H₅ | Ni | Br | 3 | -0.12 | 50 |

The following can be learned from the results in Table 1.

An overpotential for lithium nucleation deposition on the copper foil is -0.12V. It can be learned from the test results of Comparative example 1 and Examples 1 to 21, after using the electrolyte prepared in the example of this application, the overpotential for lithium nucleation deposition on the copper foil decreases. Compared with Comparative example 1, in Examples 1 to 21, an electrolyte additive (R-M-X, where R is a hydrocarbon group, M is a metal with a standard electrode potential higher than that of Li and capable of forming an intermetallic compound or an alloy solid solution with Li, and X is a halogen or a hydrocarbon group) is added to the electrolyte, reducing a lithium nucleation overpotential and improving battery cycling performance.

Compared with Comparative example 1, in Examples 1 and 8 to 13, the amount of the electrolyte additive ranges from 0.5% to 10%, significantly increasing full battery cycles. Further, when the amount of the electrolyte additive is 1% to 10%, cycling performance is better. Further, when the amount of the electrolyte additive is 2% to 9%, cycling performance is even better. Further, when the amount of the electrolyte additive is 3% to 6%, the cycling performance is significantly superior to performance corresponding to other amount ranges.

Compared with Comparative examples 1 to 3, in Examples 1 to 4, M metal in the electrolyte additive (R-M-X) is Mg, Zn, Mn, or Al. All enhance battery cycling performance.

Compared with Comparative example 1, in Examples 1, 10, and 14 to 17, R in the electrolyte additive (R-M-X) is different hydrocarbon groups. All significantly enhance battery cycling performance. The hydrocarbon groups with 1 to 10 carbon atoms have a more pronounced effect on improving the battery cycling performance compared to hydrocarbon groups with more carbon atoms.

Compared with Comparative example 2, in Examples 5 and 21, R in the electrolyte additive (R-M-X) being a hydrocarbon group rather than a non-hydrocarbon group can reduce the lithium nucleation overpotential and improve the battery cycling performance.

Based on a performance comparison between Example 10 and Example 18, it can be learned that X being a halogen rather than a hydrocarbon group in the electrolyte additive (R-M-X) can reduce the lithium nucleation overpotential and significantly improve the battery cycling performance.

Compared with Comparative example 3, in Examples 1 to 4, M metal in the electrolyte additive (R-M-X) is capable of forming an intermetallic compound or an alloy solid solution with Li, reducing the lithium nucleation overpotential and improving the battery cycling performance.

The embodiments described above are some but not all embodiments of this application. The detailed descriptions of the embodiments of this application are not intended to limit the scope of this application claimed, but merely represent selected embodiments of this application. All other embodiments obtained by persons of ordinary skill in the art based on the embodiments of this application without creative efforts shall fall within the protection scope of this application.

## Claims

1. An electrolyte, **characterized by** comprising an electrolyte additive, wherein a structure of the electrolyte additive comprises R-M-X, R comprises a hydrocarbon group, M comprises a metal with a standard electrode potential higher than a standard electrode potential of Li, X comprises anions or a hydrocarbon group, M is capable of forming an intermetallic compound or an alloy solid solution with Li, and M is configured to form a lithiophilic layer on a surface of a negative electrode current collector of a battery.

2. The electrolyte according to claim 1, **characterized in that** a mass percentage of the electrolyte additive is not greater than 10%.

3. The electrolyte according to claim 1, **characterized in that** a mass percentage of the electrolyte additive is 2% to 9%.

4. The electrolyte according to claim 1, **characterized in that** a mass percentage of the electrolyte additive is 3% to 6%.

5. The electrolyte according to claim 1 or 2, **characterized in that** M comprises at least one of Mg, Al, Mn, and Zn.

6. The electrolyte according to claim 1 or 2, **characterized in that** R comprises a hydrocarbon group with 1 to 10 carbon atoms.

7. The electrolyte according to claim 6, **characterized in that** R comprises CₙH₂ₙ₊₁, wherein n is 1 to 10.

8. The electrolyte according to claim 1 or 2, **characterized in that** X comprises a halogen.

9. The electrolyte according to claim 8, **characterized in that** X is selected from at least one of Cl, Br, I, and F.

10. The electrolyte according to claim 1 or 2, **characterized in that** X comprises a hydrocarbon group.

11. The electrolyte according to claim 10, **characterized in that** X comprises a hydrocarbon group with 1 to 10 carbon atoms.

12. The electrolyte according to claim 6, **characterized in that** M is Mg, and X is Br.

13. A lithium metal battery, **characterized in** using the electrolyte according to any one of claims 1 to 12, the lithium metal battery comprises a negative electrode, the negative electrode comprises a negative electrode current collector and a lithiophilic layer located on a surface of the negative electrode current collector, the lithiophilic layer comprises M, and M comprises a metal with a standard electrode potential higher than a standard electrode potential of Li and capable of forming an intermetallic compound or an alloy solid solution with Li.

14. The lithium metal battery according to claim 13, **characterized in that** an average thickness of the lithiophilic layer is 50 nm to 100 nm.

15. The lithium metal battery according to claim 13 or 14, **characterized in that** the negative electrode further comprises an interface film located on a surface of the lithiophilic layer, and a thickness of the interface film does not exceed 1 µm.

16. The lithium metal battery according to claim 15, **characterized in that** the interface film contains LiX, and X comprises anions.

17. The lithium metal battery according to claim 16, **characterized in that** X comprises a halogen.

18. The lithium metal battery according to claim 15, **characterized in that** the interface film contains R, and R comprises a hydrocarbon group.

19. The lithium metal battery according to claim 18, **characterized in that** R comprises a hydrocarbon group with 1 to 10 carbon atoms.

20. The lithium metal battery according to claim 13, **characterized by** further comprising an electrolyte, wherein the electrolyte comprises a lithium salt, and the lithium salt comprises at least one of lithium bis(fluorosulfonyl)imide, lithium bis(trifluoromethanesulfonyl)imide, lithium bis(oxalato)borate, and lithium difluoro(oxalato)borate.

21. An electric apparatus, **characterized by** comprising the lithium metal battery according to any one of claims 13 to 20.

22. A preparation method of the lithium metal battery according to any one of claims 13 to 20, **characterized by** comprising the following steps:
assembling a positive electrode, a negative electrode current collector, and an electrolyte into a battery, wherein the electrolyte comprises a lithium salt, an organic solvent, and an electrolyte additive, a structure of the electrolyte additive comprises R-M-X, R comprises a hydrocarbon group, M comprises a metal with a standard electrode potential higher than a standard electrode potential of Li, X comprises anions or a hydrocarbon group, and M is capable of forming an intermetallic compound or an alloy solid solution with Li; and
performing formation on the battery.

23. The preparation method of the lithium metal battery according to claim 22, **characterized in that** conditions of the formation are: charging in a constant current mode at a fixed rate of 0.15C to 0.25C until a voltage reaches 3V to 4V, and then fully charging the battery in a constant voltage mode with a cutoff current of 0.04C to 0.06C.
